# EUROPÄISCHE PATENTSCHRIFT

(11) **EP 4 443 122 B1**
(45) Veröffentlichungstag und Bekanntmachung des Hinweises auf die Patenterteilung: **23.04.2025**
(21) Anmeldenummer: 24168090.9
(22) Anmeldetag: 02.04.2024
(51) Int. Cl.: G01K 1/024, G01K 1/02, F24C 7/08

(54) **VERFAHREN ZUR HANDHABUNG VON LEBENSMITTELN**
METHOD FOR HANDLING FOOD
PROCÉDÉ DE MANIPULATION D'ALIMENTS

(30) Priorität: 04.04.2023 DE 102023108548
(43) Veröffentlichungstag der Anmeldung: 09.10.2024
(73) Patentinhaber: WELBILT Deutschland GmbH, 82436 Eglfing (DE)
(72) Erfinder: WILD, Hannes, 82418 Riegsee (DE); SIEBERT, Sebastian, 83115 Neubeuern (DE)
(74) Vertreter: Hoefer & Partner Patentanwälte mbB

(56) Entgegenhaltungen:
- EP-A1- 1 788 369
- US-B1- 6 817 757
- US-B2- 10 670 470

## Beschreibung

Die vorliegende Erfindung betrifft ein Verfahren zur Handhabung von Lebensmitteln unter Verwendung eines Thermometers für die Kerntemperaturmessung. Des Weiteren zeigt die Erfindung eine entsprechende Anordnung zur Handhabung von Lebensmitteln, vorzugsweise ausgebildet zur Durchführung des Verfahrens.

In Küchen, insbesondere Gastronomieküchen, stehen oftmals mehrere Thermometer für die Kerntemperaturmessung der Lebensmittel bereit. Dabei könne Thermometer eingesetzt werden, die nicht über ein Kabel mit dem jeweiligen Gargerät verbunden sind, sondern per Funk die Kerntemperatur an das Gargerät senden. Um mehrere Thermometer voneinander zu unterscheiden, sind diese beispielsweise mit Buchstaben oder Zahlen gekennzeichnet. Bei der Verwendung des Thermometers, wird dieses in das Lebensmittel eingesteckt und das Lebensmittel samt eingestecktem Thermometer wird in das Gargerät eingesetzt. Der Benutzer muss dabei am Gargerät auswählen, welches Thermometer er verwendet hat, sodass das Gargerät von eben diesem Thermometer die Kerntemperatur anzeigt bzw. überwacht. Dieser Vorgang ist mit entsprechendem Aufwand verbunden und ist fehleranfällig, da beispielsweise das falsche Thermometer durch den Bediener ausgewählt werden kann. Die EP 1 788 369 A1 gehört zum Stand der Technik, und offenbart ein System mit mehreren Kerntemperaturfühlern für Lebensmittel, die mehrere thermische Behandlungen nacheinander ablaufen. Die Kerntemperaturen werden drahtlos an einem Zentralstation übermittelt. Jede Behandlungsstation weist ein Lesegerät auf, mit welchem einen Identifikator des Kerntemperaturfühlers ausgelesen werden kann.

Es ist Aufgabe vorliegender Erfindung, ein Verfahren zur Handhabung von Lebensmitteln anzugeben, dass bedienerfreundlich und sicher durchgeführt werden kann.

Die Lösung dieser Aufgabe erfolgt durch die Merkmale der unabhängigen Ansprüche. Die abhängigen Ansprüche haben bevorzugte Weiterbildungen der Erfindung zum Gegenstand.

So wird die Aufgabe gelöst durch ein Verfahren zur Handhabung von Lebensmitteln, dass zumindest die folgenden Schritte umfasst.

Zunächst erfolgt das Bereitstellen mehrerer Thermometer. Bei dem einzelnen Thermometer handelt es sich insbesondere um einen Gegenstand, der in ein Lebensmittel eingesteckt werden kann. Hierzu weist das einzelne Thermometer beispielsweise einen Griff auf, von dem sich ein Stab bis zu einer Spitze erstreckt. Das Thermometer umfasst zumindest einen Kerntemperatur-Sensor und einen Außentemperatur-Sensor. Die beiden Sensoren sind innerhalb des jeweiligen Thermometers so angeordnet, dass sich - wenn das Thermometer in ein Lebensmittel eingesteckt ist - der zumindest eine Kerntemperatur-Sensor weiter im Inneren des Lebensmittels befindet als der Außentemperatur-Sensor. Wie im Folgenden erläutert wird, soll der Außentemperatur-Sensor möglichst schnell die Temperatur eines "Aufnahmeraums" des Lebensmittels annehmen bzw. messen. Deshalb ist insbesondere vorgesehen, dass der Außentemperatur-Sensor so angeordnet ist, dass er sich im eingesteckten Zustand des Thermometers außerhalb des Lebensmittels befindet, wozu dieser Sensor vorzugsweise im Griff des Thermometers angeordnet ist. Allerdings kann der Außentemperatur-Sensor auch geringfügig im Inneren des Lebensmittels angeordnet sein und dabei relativ schnell die Temperatur des Aufnahmeraums erfassen.

Jedes Thermometer weist vorzugsweise einen spezifischen Identifikator auf. Dieser Identifikator ist in einer Elektronikeinheit des Thermometers hinterlegt.

Des Weiteren erfolgt ein Bereitstellen zumindest eines Lebensmittels, in dem eines der mehreren Thermometer steckt. Dieses eine Thermometer wird im Folgenden als "eingestecktes Thermometer" bezeichnet. Wie beschrieben, befindet sich der Kerntemperatur-Sensor des eingesteckten Thermometers weiter im Inneren des Lebensmittels als der Außentemperatur-Sensor. Insbesondere befindet sich der Außentemperatur-Sensor außerhalb des Lebensmittels.

Ferner erfolgt ein fortdauerndes Messen einer Außentemperatur mit dem Außentemperatur-Sensor der mehreren Thermometer. Wie noch beschrieben wird, erfolgt vorzugsweise auch ein fortdauerndes Messen der Kerntemperatur mit dem Kerntemperatur-Sensor. Darüber hinaus erfolgt ein fortdauerndes kabelloses Übertragen der Außentemperatur, vorzugsweise auch der Kerntemperatur, zusammen mit dem Identifikator des jeweiligen Thermometers an eine Steuereinheit.

Der Ausdruck "fortdauernd" im Zusammenhang mit dem Messen der Temperaturen und dem kabellosen Übertragen beschreibt, dass dieser Vorgang nicht nur einmalig sondern mehrmalig stattfindet. Insbesondere ist vorgesehen, dass die Thermometer die Temperaturen in regelmäßigen Abständen (beispielsweise von Millisekunden oder Sekunden) messen und kabellos übertragen. Allerdings schließt der Ausdruck "fortdauernd" nicht aus, dass solch ein Messen und/oder Übertragen einzelner Thermometer oder aller Thermometer auch unterbrochen werden kann. Beispielsweise können sich die Thermometer in einer Ladestation befinden und dabei weder messen noch übertragen, da ohnehin feststeht, dass das momentan aufzuladende Thermometer nicht in Benutzung ist. Ferner ist es beispielsweise möglich, dass die Thermometer in einen Ruhezustand übergehen und dabei nicht messen und/oder nicht übertragen. Die Thermometer umfassen bevorzugt einen internen Speicher, in dem zum Beispiel die gemessenen Temperaturwerte speicherbar sind. Dieser interne Speicher wird insbesondere genutzt, wenn die Funkverbindung zu einem Empfangsmodul abbricht. Das kabellose übertragen der Daten kann fortgesetzt werden, sobald wieder eine Verbindung zum Empfangsmodul aufgebaut werden kann.

Darüber hinaus ist bevorzugt vorgesehen, dass das Thermometer erst mit dem Übertragen beginnt, wenn es einen Unterschied zwischen seiner Kerntemperatur und seiner Außentemperatur erkennt. Es ist nämlich in den allermeisten Anwendungsfällen davon auszugehen, dass - wenn das Thermometer in das Lebensmittel eingesteckt wird - sich relativ schnell ein Unterschied zwischen der gemessenen Kerntemperatur und der gemessenen Außentemperatur einstellt und dadurch erkannt werden kann, dass das Thermometer benutzt wird. Durch diese Verhalten kann die Akkulaufzeit der Thermometer erhöht werden.

Wie beschrieben, erfolgt das Übertragen der gemessenen Temperaturen zusammen mit dem Identifikator "kabellos" zu einer Steuereinheit. Für diese kabellose Übertragung ist insbesondere eine Nahfeldkommunikation, wie beispielsweise Bluetooth, vorgesehen.

Die Steuereinheit kann ein Modul oder mehrere, an unterschiedlichen Orten positionierte Module umfassen. Wie im Rahmen der erfindungsgemäßen Anordnung noch detailliert beschrieben wird, umfasst die Steuereinheit insbesondere zumindest ein Empfangsmodul; an dieses Empfangsmodul senden die Thermometer.

Ferner erfolgt im Rahmen des erfindungsgemäßen Verfahrens ein "Überführen" des Lebensmittels samt dem eingesteckten Thermometer von einem ersten Aufnahmeraum in einen zweiten Aufnahmeraum. Bei dem "Aufnahmeraum" kann es sich um ein "Zimmer" eines Gebäudes handeln, beispielsweise eine Küche oder einen Lagerraum, Kühlraum oder Gefrierraum. Darüber hinaus kann der Aufnahmeraum durch ein Gerät gebildet sein; diese Art von Geräten werden vorliegend als Lebensmittelaufnahmegeräte bezeichnet. Solch ein Lebensmittelaufnahmegerät ist beispielsweise ein Gargerät, insbesondere Kombidämpfer, ein Warmhaltegerät, ein Schnellkühler, ein Schockfroster, ein Kühlschrank oder Gefrierschrank. Dabei ist vorgesehen, dass das Lebensmittelaufnahmegerät einen Aufnahmeraum bildet, in den ein Lebensmittel überführt werden kann.

Im Folgenden werden die Bezeichnungen "erster Aufnahmeraum" und "zweiter Aufnahmeraum" verwendet. Der erste Aufnahmeraum ist dabei stets derjenige Aufnahmeraum, indem sich das Lebensmittel mit eingestecktem Thermometer zunächst befindet und der zweite Aufnahmeraum ist derjenige Aufnahmeraum, in den das Lebensmittel mit eingestecktem Thermometer überführt wird. Wird beispielsweise ein Hähnchen mit eingestecktem Thermometer in ein Gargerät gesteckt, so handelt es sich um eine Überführung aus dem ersten Aufnahmeraum "Küche" in den zweiten Aufnahmeraum, der auch als "Garraum" des Gargerätes bezeichnet werden kann.

Der erste Aufnahmeraum weist eine erste Aufnahmeraumtemperatur auf. Der zweite Aufnahmeraum weist eine zweite Aufnahmeraumtemperatur auf. Diese beiden Aufnahmeraumtemperaturen unterscheiden sich voneinander. Wird also das Lebensmittel mit eingestecktem Thermometer vom ersten Aufnahmeraum in den zweiten Aufnahmeraum überführt, so ändert sich auch relativ schnell die Außentemperatur, gemessen mit dem Außentemperatur-Sensor des eingesteckten Thermometers. Diese Erkenntnis wird im Folgenden ausgenutzt, um zu ermitteln, welches der mehreren Thermometer in dem Lebensmittel steckt bzw. welches der mehreren Thermometern verwendet wird.

So erfolgt im erfindungsgemäßen Verfahren folgender Schritt, bezeichnet als "Thermometerzuordnung": Zuordnen, welches der mehreren Thermometer als "eingestecktes Thermometer", zusammen mit dem Lebensmittel überführt wurde. Diese Zuordnung erfolgt mittels der Steuereinheit und basiert auf der gemessenen Außentemperatur der mehreren Thermometer.

Für die Thermometerzuordnung wertet die Steuereinheit, insbesondere fortdauernd, aus, ob sich eine der Außentemperaturen der mehreren Thermometer verändert. Wenn beispielsweise die Außentemperatur eines Thermometers von Raumtemperatur (z.B. 21°C) auf über 80°C ansteigt, und die Außentemperatur alle anderen Thermometer im Wesentlichen gleichbleibt, kann die Steuereinheit darauf schließen, dass dieses eine Thermometer nun benutzt wird und sich somit in einem Lebensmittel befindet, dass gerade in ein Gargerät überführt wird.

Eine ähnliche Situation kann sich bei folgender Betrachtung ergeben: angenommen alle verwendeten Thermometer in einer Küche stecken in Lebensmitteln und befinden sich im Aufnahmeraum eines Gargerätes. Dabei übermitteln die Thermometer an die Steuereinheit jeweils Außentemperaturen die wesentlich über beispielsweise 80°C liegen. Sobald eines der Lebensmittel mit eingesteckten Thermometer aus dem Gargerät entnommen wird, sinkt die Außentemperatur des zugehörigen Thermometers ab wohingegen die Außentemperatur aller anderen Thermometer im Wesentlichen gleichbleibt. So kann die Steuereinheit erkennen, welches Thermometer zusammen mit dem Lebensmittel überführt wurde; wobei in diesem Fall das Gargerät den ersten Aufnahmeraum bildet und die Küche den zweiten Aufnahmeraum darstellt.

In bevorzugter Ausführung ist vorgesehen, dass nicht nur eine Thermometerzuordnung, sondern auch eine Aufnahmeraumzuordnung erfolgt. Diese Aufnahmeraumzuordnung kann grundsätzlich gleichzeitig mit der Thermometerzuordnung erfolgen, oder nach der Thermometerzuordnung durchgeführt werden. Für die Aufnahmeraumzuordnung sind grundsätzlich zwei unterschiedliche Varianten vorgesehen, die jedoch auch beide durchgeführt werden können, um dabei durch eine Variante das Ergebnis der anderen Variante zu verbessern bzw. zu validieren:
(A) Die erste Variante wird als "erste Aufnahmeraumzuordnung" bezeichnet. Dabei erfolgt ein Zuordnen, in welchen Aufnahmeraum das eingesteckte Thermometer zusammen mit dem Lebensmittel überführt wurde, basierend auf der gemessenen Außentemperatur des eingesteckten Thermometers. Auch diese Zuordnung erfolgt mittels der Steuereinheit.

Nachdem zugeordnet wurde, welches Thermometer das "eingesteckte Thermometer" ist, kann die Änderung der Außentemperatur mittels der Steuereinheit genauer betrachtet werden. Steigt beispielsweise die Außentemperatur auf über 80°, so kann die Steuereinheit davon ausgehen, dass das Lebensmittel samt dem eingesteckten Thermometer in ein Gargerät überführt wurde. Wenn es mehrere Gargeräte in der Küchenumgebung gibt, kann das Steuergerät beispielsweise mitberücksichtigen, welches der Gargeräte aktiv ist oder in welchem der Gargeräte welche Aufnahmeraumtemperatur herrscht. Andererseits kann mittels der Steuereinheit auch erkannt werden, dass die Außentemperatur des eingesteckten Thermometers beispielsweise unter 0° abfällt, wodurch die Steuereinheit ohne weiteres darauf schließen kann, dass das Thermometer samt dem Lebensmittel in den Gefrierschrank überführt wurde.

Es versteht sich, dass die erste Aufnahmeraumzuordnung auch zeitgleich mit der Thermometerzuordnung erfolgen kann. Ist beispielsweise in der Steuereinheit hinterlegt, dass der Aufnahmeraum eines ersten Gargerätes auf 80°C aufgeheizt ist und der Aufnahmeraum eines zweiten Gargerätes auf 200°C aufgeheizt ist, so kann bei Überführen des Lebensmittels samt eingestecktem Thermometer in einen der beiden Aufnahmeräume unmittelbar erfasst werden, dass eben dieses Thermometer das "eingesteckte Thermometer" ist und gleichzeitig kann erfasst werden, in welchen der beiden Aufnahmeräume die Überführung erfolgt, nämlich in dem erkannt wird, ob die Außentemperatur auf etwa 80°C oder auf etwa 200°C ansteigt.

(B) Zusätzlich oder alternativ zur ersten Aufnahmeraumzuordnung kann mittels der Steuereinheit auch noch eine zweite Variante, bezeichnet als "zweite Aufnahmeraumzuordnung" berücksichtigt werden. Dabei erfolgt ein Zuordnen, in welchen Aufnahmeraum das eingesteckte Thermometer zusammen mit dem Lebensmittel überführt wurde, basierend auf zumindest einem der folgenden Punkte:
(i) Der jeweilige Aufnahmeraum kann eine Tür aufweisen. Beispielsweise befindet sich an einem Gargerät eine entsprechende Tür um den Garraum zu verschließen. Aber auch an einem Kühlschrank, einem Lagerraum, einem Kühlraum u.s.w. befinden sich Türen, die geöffnet werden müssen, um ein Lebensmittel zu überführen. Im Rahmen des Verfahrens ist bevorzugt vorgesehen, dass eine Betätigung der jeweiligen Tür erkannt wird. Dies erfolgt beispielsweise mittels eines einfachen Schalters an der Tür.

Die Steuereinheit kann solch eine Betätigung der Tür erkennen und diese Information nutzen, um den Aufnahmeraum zuzuordnen.

An folgendem Beispiel sei erklärt, wie die erste Aufnahmeraumzuordnung mit der zweiten Aufnahmeraumzuordnung kombiniert werden kann. Es sei angenommen, dass in der Küchenumgebung zwei Gargeräte stehen, die jeweils auf die gleiche Temperatur aufgeheizt sind. Des Weiteren gibt es einen Kühlschrank. An allen drei Geräten kann das Betätigen der Tür erkannt werden. Wird nun ein Lebensmittel relativ schnell aus dem Kühlschrank in eines der beiden Gargeräte überführt, so kann diese Überführung vom Kühlschrank in eines der beiden Gargeräte ohne weiteres anhand der Außentemperaturänderung des eingesteckten Thermometers erkannt werden. Da die Steuereinheit erkennt, dass die Tür nur eines der beiden Gargeräte geöffnet wurde, kann sicher darauf geschlossen werden, in welches Gargerät das Lebensmittel mit eingestecktem Thermometer überführt wird. Würde die Steuereinheit nur die Außentemperatur heranziehen, so könnte sie nicht ohne weiteres feststellen, in welches Gargerät überführt wurde. Würde andererseits die Steuereinheit nur die Betätigung der Türen an den beiden Gargeräten und am Kühlschrank erfassen, so könnte die Steuereinheit, ohne Berücksichtigung der gemessenen Außentemperatur, nicht ohne weiteres feststellen, ob das Lebensmittel nun in das Gargerät oder in den Kühlschrank überführt wurde. Dieses Beispiel soll zeigen, dass in Abhängigkeit der sehr unterschiedlichen Geräte, die in einer Küchenumgebung verwendet werden können, die erste Aufnahmeraumzuordnung oder die zweite Aufnahmeraumzuordnung oder aber eine Kombination beider Aufnahmeraumzuordnungen anzuwenden ist.

ii) Des Weiteren ist vorgesehen, dass für die zweite Aufnahmeraumzuordnung mittels einer Kamera im Übergangsbereich zwischen dem ersten Aufnahmeraum und dem zweiten Aufnahmeraum das Lebensmittel und/oder das eingesteckte Thermometer erfasst wird. Solch eine Kamera, beispielsweise im Bereich der Tür eines Gargerätes, kann erfassen, dass ein Lebensmittel überführt wird. Dabei kann die Steuereinheit vorzugsweise auch auswerten, ob in dem erfassten Lebensmittel ein Thermometer steckt und/oder um welches Lebensmittel es sich handelt.

iii) Darüber hinaus ist im Rahmen der zweiten Aufnahmeraumzuordnung bevorzugt vorgesehen, dass die Steuereinheit die Signalstärke auswertet, mit der die Thermometer die Daten übertragen. Dabei ist zu berücksichtigen, dass in der Steuereinheit eine relative Positionierung zwischen dem Empfangsmodul und den jeweiligen Aufnahmeräumen hinterlegt werden kann. Befindet sich beispielsweise ein Empfangsmodul unmittelbar an dem Gerät, dass den Aufnahmeraum bildet, so gibt eine relativ große Signalstärke, im Vergleich zu den Signalstärken anderer Thermometer, ein starkes Indiz dafür, dass das jeweilige Thermometer in eben diesen Aufnahmeraum überführt wurde oder aus diesem Aufnahmeraum herausgenommen wurde.

Bevorzugt ist vorgesehen, dass im Rahmen des Verfahrens mehr als zwei Aufnahmeräume für die Zuordnung des eingesteckten Thermometers zur Auswahl stehen. Wenn es sich lediglich um ein Lebensmittelaufnahmegerät (beispielsweise Gargerät) handelt, dass in einer Küche steht, so ist die Zuordnung der Aufnahmeräume relativ simpel, da lediglich eine Überführung von der Küche in das Lebensmittelaufnahmegerät und in Gegenrichtung erfolgen kann. Insbesondere wenn mehr als zwei Aufnahmeräume zur Verfügung stehen, beispielsweise zwei Lebensmittelaufnahmegeräte und die Küche, dann ist die beschriebene Aufnahmeraumzuordnung besonders vorteilhaft anzuwenden. Besonders bevorzugt berücksichtigt das Verfahren, dass zumindest drei, besonders vorzugsweise zumindest vier, Aufnahmeräume für die Zuordnung des eingesteckten Thermometers zur Auswahl stehen.

Für die Thermometerzuordnung und/oder für die erste Aufnahmeraumzuordnung ist vorzugsweise vorgesehen, dass mittels der Steuereinheit die gemessene Außentemperatur mit zumindest einem Außentemperatur-Referenzwert verglichen wird. Zusätzlich oder alternativ ist es möglich, dass mittels der Steuereinheit eine Änderungsrate der gemessenen Außentemperatur des jeweiligen Thermometers ermittelt wird und diese Änderungsrate mit zumindest einem Änderungsrate-Referenzwerts verglichen wird.

Im einfachsten Fall gibt es jeweils nur einen Referenzwert also z.B. einen Außentemperatur-Referenzwert oder einen Änderungsrate-Referenzwert. Wenn dieser Referenzwert überschritten wird oder unterschritten wird, kann darauf geschlossen werden, dass eben jenes Thermometer das "eingesteckte Thermometer" ist. Vorzugsweise, werden jedoch in der Steuereinheit mehrere dieser Referenzwerte verwendet; dabei können mehrere Außentemperatur-Referenzwerte und/oder mehrere Änderungsrat-Referenzwerte zur Anwendung kommen. Dadurch ist insbesondere eine wesentlich genauere erste Aufnahmeraumzuordnung möglich. Deshalb ist bevorzugt vorgesehen, dass der zumindest eine Außentemperatur-Referenzwert und/oder der zumindest eine Änderungsrate-Referenzwert jeweils einem bestimmten Aufnahmeraum zugeordnet ist/sind.

Der jeweilige Referenzwert, sei es der Außentemperatur-Referenzwert oder der Änderungsrate-Referenzwert, kann grundsätzlich als fester Wert in der Steuereinheit hinterlegt sein. Ist der jeweilige Referenzwert beispielsweise einem Kühlschrank, Gefrierschrank, Schnellkühler, Schockfroster usw. zugeordnet, so kann es ausreichen, wenn ein fester Wert für einen solchen Aufnahmeraum hinterlegt ist, da sich die Temperatur eines solchen Aufnahmeraums im Regelfall nur unwesentlich verändert. Beispielsweise kann ein Gefrierschrank stets auf -18°C eingestellt sein.

Darüber hinaus ist jedoch auch vorgesehen, dass der jeweilige Referenzwert von der Steuereinheit in Abhängigkeit der zugehörigen Aufnahmeraumtemperatur angepasst wird. Diese Aufnahmeraumtemperatur kann gemessen werden oder auf sonstige Weise ermittelt werden. Beispielsweise kann die Aufnahmetemperatur eines Garraums gemessen werden und an die Steuereinheit übermittelt werden. Allerdings kann es auch ausreichen, dass die eingestellte Temperatur (Soll-Temperatur) des Aufnahmeraums an die hier definierte Steuereinheit übermittelt wird. In beiden Fällen kann die Steuereinheit basierend auf dieser Information den Referenzwert entsprechend anpassen. Wird beispielsweise ein Gargerät auf 80°C vorgeheizt, so kann die Steuereinheit den zugehörigen Referenzwert auf beispielsweise 70°C setzen. Wenn an einem der Thermometer eine Außentemperatur von zumindest 70°C ermittelt wird, kann die Steuereinheit darauf schließen, dass dieses Thermometer zusammen mit einem Lebensmittel in den zugehörigen Aufnahmeraum überführt wurde.

Berücksichtigt man nicht nur die gemessene Außentemperatur, sondern die Änderungsrate der gemessenen Außentemperatur, so lässt sich in bestimmten Situationen eine sehr genaue und insbesondere schnelle Zuordnung durchführen. Ist beispielsweise ein Gargerät auf 80°C vorgeheizt und ein anderes Gargerät auf 200°C vorgeheizt, so kann nach einer gewissen Zeit, nach dem das Thermometer samt Lebensmittel überführt wurde, anhand der Außentemperatur festgestellt werden, in welchem der beiden Gargeräte sich das Lebensmittel samt Thermometer befindet. Um diesen Vorgang jedoch zu beschleunigen, kann die Änderungsrate der Außentemperatur beobachtet werden. Erfolgt eine Überführung in das kältere Gargerät (80°C), so steigt die gemessenen Außentemperatur am Thermometer langsamer an als bei einer Überführung in das heißere Gargerät (200°C). Dadurch kann noch vor Erreichen der endgültigen Außentemperatur am Thermometer erkannt werden, in welches der beiden Gargeräte überführt wurde.

Ferner wird vorzugsweise berücksichtigt, dass die Thermometerzuordnung und/oder die Aufnahmeraumzuordnung (erste Aufnahmeraumzuordnung und/oder zweite Aufnahmeraumzuordnung) erst gestartet wird/werden, wenn zumindest eine der folgenden Startvoraussetzungen vorliegt. Dadurch kann unnötiger Rechenaufwand in der Steuereinheit eingespart werden und es können Fehlzuordnungen vermieden werden:
(i) Erkennen einer Betätigung einer Tür an einem der Aufnahmeräume. Dabei wird berücksichtigt, dass es äußerst unwahrscheinlich ist, dass ein Lebensmittel überführt wird, wenn überhaupt keine Tür an einem der Aufnahmeräume betätigt wird.
(ii) Erfassen des Lebensmittels und/oder des eingesteckten Thermometers mittels einer Kamera im Übergangbereich zwischen dem ersten Aufnahmeraum und dem zweiten Aufnahmeraum. Diese Startvoraussetzung ist insbesondere Sinnvoll, wenn an alles Übergängen zwischen den Aufnahmeräumen in der jeweiligen Küchenumgebung solch eine Kamera zum Einsatz kommt. So kann erst dann mit der Zuordnung begonnen werden, wenn an einem der Übergänge eine Überführung eines Lebensmittels erkannt wird.
(iii) Erkennen eines Temperaturunterschieds zwischen der mit dem Kerntemperatursensor gemessenen Kerntemperatur und der Außentemperatur an einem der Thermometer. Dieses Erkennen kann sowohl innerhalb der Thermometer als auch innerhalb der Steuereinheit erfolgen. Beispielsweise kann das Thermometer selbst erkennen, ob solch ein Temperaturunterschied vorliegt und daraufhin eine entsprechende Nachricht an die Steuereinheit senden, dass nun mit der Zuordnung zu beginnen ist. Allerdings kann auch die Steuereinheit solch einen Temperaturunterschied zwischen Außentemperatur und Kerntemperatur des einzelnen Thermometers erkennen und daraufhin mit der Zuordnung starten. Es wird davon ausgegangen, dass ein Thermometer, dass nicht im Lebensmittel steckt in etwa die gleiche Kerntemperatur und Außentemperatur misst. Sobald das Thermometer eingesteckt wird, entsteht eine Temperaturdifferenz zwischen Kerntemperatur und Außentemperatur, da im Regelfall das Lebensmittel gekühlt ist und vor dem Überführen in einen anderen Aufnahmeraum sich in der Küchenumgebung befindet, sodass als Außentemperatur in etwa die Temperatur der Küche gemessen wird und als Kerntemperatur die wesentlich geringere Temperatur des gekühlten Lebensmittels.
(iv) Darüber hinaus ist es möglich, dass die Zuordnung erst startet, wenn der Benutzer eine Benutzereingabe ausführt. Diese Benutzereingabe kann an einer beliebigen Mensch-Maschine-Schnittstelle (MMS) erfolgen, die datentechnisch mit der Steuereinheit verbunden ist. Beispielsweise kann die MMS an dem Lebensmittelaufnahmegerät angeordnet sein, dass den zweiten Aufnahmeraum bildet. Wird beispielsweise das Lebensmittel in ein Gargerät überführt, so kann für diese Benutzereingabe die MMS des Gargerätes, also beispielsweise das Touch-Display am Gargerät, verwendet werden.

Darüber hinaus ist bevorzugt vorgesehen, dass die Thermometerzuordnung einem Benutzer angezeigt wird. Vorzugsweise hat der Benutzer dabei die Möglichkeit, die Thermometerzuordnung zu bestätigen und/oder zu ändern. Hierzu ist insbesondere vorgesehen, dass das jeweilige Thermometer zusätzlich zu dem beschriebenen Identifikator, der elektronisch übermittelt wird, auch eine sichtbare, individuelle Kennzeichnung (beispielsweise Zahl, Buchstabe oder Farbcode) aufweist. Dem Benutzer kann dadurch angezeigt werden, dass ein bestimmtes Thermometer zugeordnet wurde, beispielsweise das "rote" Thermometer. Daraufhin kann der Benutzer dies vorzugsweise bestätigen und/oder ändern.

In ähnlicher Weise ist bevorzugt vorgesehen, dass auch die Aufnahmeraumzuordnung einem Benutzer angezeigt wird und vorzugsweise durch den Benutzer bestätigbar und/oder änderbar ist.

Wie bereits beschrieben, ist vorzugsweise vorgesehen, dass mittels des Kerntemperatur-Sensors des eingesteckten Thermometers fortlaufend die Kerntemperatur gemessen wird und die Kerntemperatur zusammen mit dem Identifikator fortdauernd kabellos an die Steuereinheit übertragen wird.

Dies ermöglicht insbesondere die folgenden Ausgestaltungen des Verfahrens:
(i) Vorzugsweise werden die Kerntemperatur und der zugehörige Aufnahmeraum angezeigt. Das Anzeigen des zugehörigen Aufnahmeraums ist insbesondere dann von Interesse, wenn die Anzeige dieser Information nicht unmittelbar am Aufnahmeraum, beispielsweise am Gargerät, erfolgt, sondern an einer nicht gerätegebundenen MMS, beispielsweise einem Smartphone oder Tablet.
(ii) Darüber hinaus ist bevorzugt vorgesehen, dass die Kerntemperatur an einem Display, insbesondere MMS des Lebensmittelaufnahmegerätes, angezeigt wird, dass den zweiten Aufnahmeraum bildet. In diesem Fall muss der zugeordnete Aufnahmeraum nicht zwingend angezeigt werden, da dem Benutzer ohnehin klar ist, dass eben dieser Aufnahmeraum, an dem die Anzeige der Kerntemperatur erfolgt, als der richtige Aufnahmeraum zugeordnet wurde.
(iii) Darüber hinaus ist bevorzugt vorgesehen, dass in Abhängigkeit der Kerntemperatur die Temperatur des ersten Aufnahmeraums und/oder des zweiten Aufnahmeraums gesteuert wird. Der "erste Aufnahmeraum" ist dabei der Aufnahmeraum, aus dem das Lebensmittel entnommen wird. Wird beispielsweise erkannt, dass das Lebensmittel samt eingestecktem Thermometer aus einem Garraum entnommen wird, so kann automatisch die Temperatur dieses Garraums abgesenkt werden. In den meisten Anwendungsfällen wird jedoch in Abhängigkeit der Kerntemperatur die Temperatur des zweiten Aufnahmeraums gesteuert, nämlich desjenigen Aufnahmeraums, in den das Lebensmittel überführt wurde. Beispielsweise kann in Abhängigkeit der Kerntemperatur die Temperatur des Gargerätes mit zunehmendem Erreichen einer Sollkerntemperatur abgesenkt werden.
(iv) Darüber hinaus ist bevorzugt vorgesehen, dass in Abhängigkeit der Kerntemperatur eine Verweilzeit des Lebensmittels im zweiten Aufnahmeraum bestimmt, und vorzugsweise angezeigt, wird. So kann überwacht werden, dass das Lebensmittel nicht zu lange in dem zweiten Aufnahmeraum bleibt und insbesondere bei Erreichen der Kerntemperatur ein Ende der Verweilzeit angezeigt wird.
(v) Ferner ist bevorzugt vorgesehen, dass in Abhängigkeit der Kerntemperatur eine Warnung ausgegeben wird, wenn das Lebensmittel bei zu geringer Kerntemperatur überführt wird. So kann beispielsweise überwacht werden, dass ein Lebensmittel (beispielsweise Fisch oder Geflügel), nicht bei zu niedriger Kerntemperatur aus dem Gargerät entnommen wird.

Bevorzugt ist vorgesehen, dass zur Qualitätsüberwachung des Lebensmittels in der Steuereinheit die zeitliche Abfolge der Thermometerzuordnung und/oder Aufnahmeraumzuordnung (erste Aufnahmeraumzuordnung und/oder zweite Aufnahmeraumzuordnung), insbesondere auch die gemessenen Temperaturen, protokolliert wird/werden. Durch diese Qualitätsüberwachung und die Protokollierung der Messwerte und Zuordnungen kann die Kühlkette für das Lebensmittel mit eingestecktem Thermometer überwacht werden. Dabei ist vorzugsweise vorgesehen, dass diese Protokollierung über mehrere Überführungen hinweg erfolgt, insbesondere über zumindest zwei oder zumindest drei Überführungen. So wird beispielsweise protokolliert, während sich das Lebensmittel mit eingesteckten Thermometer in einem Kühlraum befindet, von diesem Kühlraum in die Küche überführt wird und von der Küche in das Gargerät überführt wird. Dieses Protokollieren kann bei der Einhaltung von HACCP-Richtlinien und EN-Normen für Lebensmittel unterstützen.

Die Erfindung umfasst ferner eine Anordnung zur Handhabung von Lebensmitteln. Diese Anordnung ist vorzugsweise zur Durchführung des Verfahrens, wie es vorab beschreiben wurde, ausgeführt. Insbesondere ist vorgesehen, dass die beschriebenen Ausgestaltungen des Verfahrens und die zugehörigen Unteransprüche des Verfahrens vorteilhafte Ausgestaltungen der erfindungsgemäßen Anordnung bilden.

Die erfindungsgemäße Anordnung umfasst mehrere der Thermometer. Wie beschrieben, weist jedes Thermometer einen für das Thermometer spezifischen Identifikator, zumindest einen Kerntemperatur-Sensor und einen Außentemperatur-Sensor auf.

Zusätzlich zu den Thermometern umfasst die Anordnung die Steuereinheit. Wie bereits beschrieben, ist diese Steuereinheit dazu ausgebildet, die Zuordnung durchzuführen, welches Thermometer als "eingestecktes Thermometer" zusammen mit einem Lebensmittel überführt wurde. Diese Zuordnung erfolgt basierend auf der gemessenen Außentemperatur der Thermometer und eben dann wenn eine Überführung des Lebensmittels samt dem eingesteckten Thermometer von einem ersten Aufnahmeraum in einen zweiten Aufnahmeraum stattfindet. Wie bereits beschrieben, unterscheiden sich diese beiden Aufnahmeräume in Ihren Aufnahmeraumtemperaturen.

Insbesondere für die Zuordnung des Thermometers und für die Zuordnung des Aufnahmeraums sei auf das bereits beschriebene Verfahren verwiesen. Die Steuereinheit der definierten Anordnung ist zur Durchführung dieser Zuordnungen, wie im Rahmen des Verfahrens beschrieben, bevorzugt ausgebildet.

Die Steuereinheit kann zumindest ein Empfangsmodul umfassen. Die Thermometer und das Empfangsmodul sind zur kabellosen Datenübertragung ausgebildet. Dabei erfolgt zumindest eine unidirektionale Datenübertragung, nämlich von den Thermometern zum Empfangsmodul. Für die Datenübertragung zwischen Thermometer und Empfangsmodul ist insbesondere eine Nahfeldkommunikation, beispielsweise Bluetooth, vorgesehen. Bevorzugt umfasst die Steuereinheit mehrere Empfangsmodule, die an unterschiedlichen Positionen angeordnet werden können. Vorzugsweise befindet sich zumindest eines der Empfangsmodule in einem Lebensmittelaufnahmegerät. Das Empfangsmodul kann dabei vollständig oder teilweise im Inneren des Lebensmittelaufnahmegerätes angeordnet sein oder außen an dem Lebensmittelaufnahmegerät.

Des Weiteren kann die Steuereinheit ein Rechenmodul umfassen. Das Rechenmodul ist zur Durchführung der beschriebenen Zuordnungen ausgebildet. Das Rechenmodul kann räumlich aufgeteilt sein. So kann ein Teil des Rechenmoduls sich in der Küchenumgebung, insbesondere in einem der Lebensmittelaufnahmegeräte, befinden und ein anderer Teil des Rechenmoduls kann sich in einem Server oder einer Cloud befinden. Die unterschiedlichen Teile des Rechenmoduls sind dabei über ein entsprechendes Netzwerk, insbesondere das Internet, miteinander verbunden. Allerdings ist es auch möglich, dass das gesamte Rechenmodul lokal angeordnet ist, insbesondere in einem der Lebensmittelaufnahmegeräte integriert ist.

Insbesondere ist vorgesehen, dass die mehreren, vorzugsweise alle, Empfangsmodule direkt und/oder über ein Netzwerk miteinander verbunden sind, sodass die Thermometer an ein beliebiges - insbesondere das nächstliegende - Empfangsmodul übertragen können. So kann insbesondere ein Empfangsmodul an beliebiger Stelle, zum Beispiel in einem beliebigen Lebensmittelaufnahmegerät, als "Range extender" oder "Repeater", die Daten vom Thermometer empfangen und direkt oder über das Netzwerk an das Rechenmodul weiterleiten. Dieses Rechenmodul kann sich dabei in einem anderen Lebensmittelaufnahmegerät oder an sonstiger Stelle befinden.

Die Repeaterfunktion ermöglicht z.B. Folgendes: Befindet sich beispielsweise das Thermometer in einem Kühlschrank, der nicht ins Netzwerk eingebunden ist, kann über ein anderes Gerät in der Nähe, z. B. über einen Dämpfer mit Empfangsmodul, trotzdem das Thermometer seine Daten ins Netzwerk einspeisen.

Insbesondere durch die "Repeaterfunktion" ergibt sich die Möglichkeit eine Echtzeit-Überwachung (live) darzustellen. Man kann z.B. beliebig viele Geräte in der Küchenumgebung mit einbinden und so die Prozesse bzw. die von den Thermometern gesendeten Temperaturen nahtlos überwachen. Bei einer Abweichung zu einem geforderten Prozessablauf bzw. Temperatur (z.B. zu lange gelagerte Produkte, falsche Kerntemperatur, Türe des Kühlraums ist offen und Temperatur steigt an, etc.) kann eine Warnung auf den Geräten angezeigt werden. Auch ein eigener Monitor in der Küche, welcher für die Überwachung und Darstellung der Prozessabläufe installiert ist, kann eingebunden werden. Oder eine Hinweis-Nachricht auf einem mobilen Endgerät, wie z. B. Handy des Küchenchefs etc, kann ausgegeben werden.

Ferner kann die Steuereinheit zumindest eine Mensch-Maschine-Schnittstelle, auch als MMS bezeichnet, umfassen. Diese MMS kann beispielsweise in das Lebensmittelaufnahmegerät integriert sein. Beispielsweise weist ein Gargerät ohnehin eine MMS (z.B. Touch-Display) auf, das auch für die Steuereinheit und somit für das beschriebene Verfahren genutzt werden kann.

Darüber hinaus kann allerdings auch ein tragbares Endgerät, wie beispielsweise ein Smartphone oder ein Tablet, oder eine sonstige Bedieneinheit, diese Mensch-Maschine-Schnittstelle der Steuereinheit bilden. Beispielsweise kann das tragbare Endgerät über ein beliebiges Netzwerk (Internet und/oder WLAN) mit dem Rechenmodul verbunden sein.

Darüber hinaus ist bevorzugt vorgesehen, dass die Steuereinheit zumindest ein Lebensmittelaufnahmegerät umfasst. Vorzugsweise umfasst die Steuereinheit mehrere Lebensmittelaufnahmegeräte. Jedes dieser Lebensmittelaufnahmegeräte bildet einen Aufnahmeraum, wie er im Rahmen des erfindungsgemäßen Verfahrens bereits definiert wurde. Das einzelne Lebensmittelaufnahmegerät ist vorzugsweise ausgebildet als: Gargerät, Warmhaltegerät, Schnellkühler, Schockfroster, Kühlschrank, Gefrierschrank, Kühlraum, Lagerraum oder Gefrierraum.

Bevorzugt ist vorgesehen, dass die Steuereinheit zumindest zwei Empfangsmodule umfasst, wobei eines der Empfangsmodule angeordnet ist, um im Inneren eines der Lebensmittelaufnahmegeräte zu empfangen und das andere Empfangsmodul angeordnet ist, außerhalb dieses Lebensmittelaufnahmegerätes zu empfangen. Dabei wird insbesondere berücksichtigt, dass die Tür am Lebensmittelaufnahmegerät den Empfang zwischen Empfangsmodul und Thermometer relativ stark stören kann. Deshalb sollte sich, je nach Ausgestaltung der Lebensmittelaufnahmegeräte, sowohl im Aufnahmeraum als auch außerhalb des Aufnahmeraums jeweils zumindest ein Empfangsmodul befinden.

Als nicht zur Erfindung gehörendes Beispiel, wird weiter auf ein Lebensmittelaufnahmegerät vorzugsweise das vorab beschriebene Lebensmittelaufnahmegerät - hingewiesen. Insbesondere ist das Lebensmittelaufnahmegerät zum Erwärmen oder Kühlen von Lebensmitteln ausgebildet. Das Lebensmittelaufnahmegerät ist beispielsweise ein Gargerät, insbesondere Kombidämpfer, ein Warmhaltegerät, ein Schnellkühler, ein Schockfroster, ein Kühlschrank oder Gefrierschrank. Das Lebensmittelaufnahmegerät umfassend eine integrierte Aufnahme zum Einsetzten von zumindest einem Thermometer, wobei die Aufnahme zum Aufladen eines Energiespeichers des zumindest einen Thermometers ausgebildet ist. Vorzugsweise ist die Aufnahme zum Einsetzten von mehreren, insbesondre zumindest zwei oder zumindest drei, Thermometern ausgebildet.

Die Aufnahme ist vorzugsweise zum Einsetzten von kabellos übertragenden Thermometern mit Kerntemperatur-Sensor ausgebildet.

Die Aufnahme ist vorzugsweise für ein wireless charging des zumindest einen Thermometers ausgebildet. Alternativ kann die Aufnahme auch elektrisch leitende Kontakte aufweisen, über die eine Stromübertragung zu dem zumindest einen Thermometer möglich ist.

Das Lebensmittelaufnahmegerät umfasst vorzugsweise eine Netzgerätanordnung mit zumindest einem Netzgerät. Die Netzgerätanordnung versorgt zumindest eine Vorrichtung des Lebensmittelaufnahmegerätes, die zum Erwärmen oder Kühlen des Lebensmittels dient. Die Aufnahme ist vorzugsweise ebenfalls an die Netzgerätanordnung angeschlossen, um mit der nötigen Energie zum Aufladen des/der Thermometer(s) versorgt zu werden.

Vorzugsweise umfasst das Lebensmittelaufnahmegerät eine Abdeckung, insbesondere ausgebildet als schwenkbare Klappe, wobei die Aufnahme an der Innenseite der Abdeckung angeordnet ist. Die Abdeckung deckt vorzugsweise einen Raum im Gehäuse des Lebensmittelaufnahmegerätes ab.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
Fig. 1 eine erste Ansicht der erfindungsgemäßen Anordnung zur Durchführung des erfindungsgemäßen Verfahrens gemäß einem Ausführungsbeispiel,
Fig. 2 eine Detailansicht eines Thermometers der erfindungsgemäßen Anordnung zur Durchführung des erfindungsgemäßen Verfahrens gemäß dem Ausführungsbeispiel,
Fig. 3 eine weitere schematische Ansicht der erfindungsgemäßen Anordnung zur Durchführung des erfindungsgemäßen Verfahrens gemäß dem Ausführungsbeispiel,
Fig. 4 und 5 zwei schematische Beispiele zur Durchführung der Zuordnung im Rahmen des erfindungsgemäßen Verfahrens gemäß dem Ausführungsbeispiel, und
Fig. 6 eine Aufnahme zum Aufladen von Thermometern eines erfindungsgemäßen Lebensmittelaufnahmegerätes gemäß einem Ausführungsbeispiel.

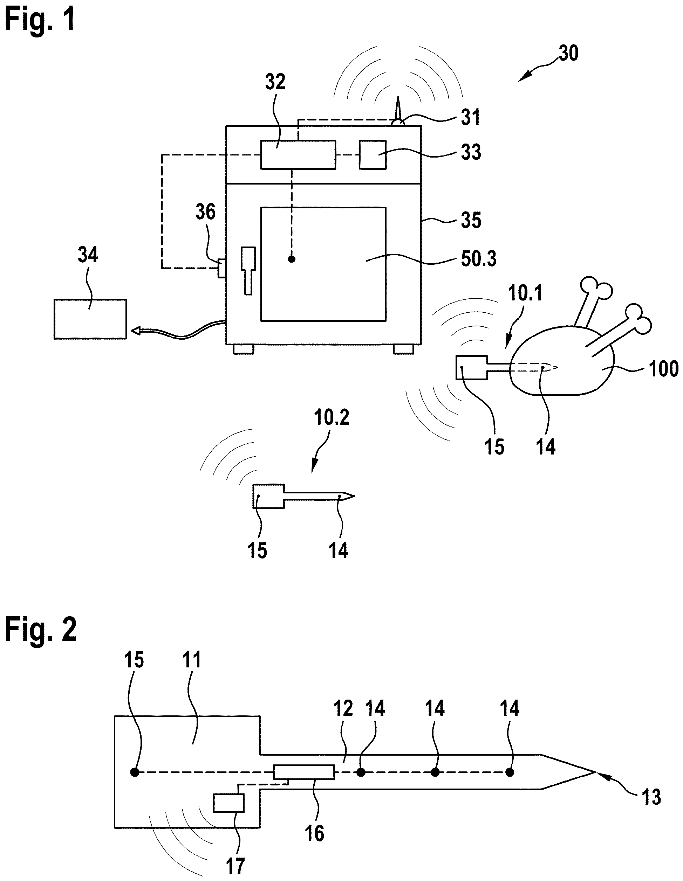

Im Folgenden wird anhand der Figuren 1 bis 5 eine Anordnung 1 zur Durchführung des erfindungsgemäßen Verfahrens im Detail beschrieben.

Figuren 1 bis 3 verdeutlichen, dass die Anordnung 1 mehrere Thermometer 10 umfasst. Jedes Thermometer 10, wie insbesondere Figur 2 zeigt, weist einen Griff 11 auf, von dem sich ein Stab 12, insbesondere aus Metall, erstreckt. Der Stab 12 endet mit einer Spitze 13. Mit dieser Spitze 13 voran wird das Thermometer 10 in ein entsprechendes Lebensmittel 100 eingesteckt.

Das Thermometer 10 weist zumindest einen Kerntemperatur-Sensor 14 auf. Im gezeigten Ausführungsbeispiel können auch mehrere dieser Kerntemperatur-Sensoren 14 vorhanden sein.

Ferner weist das Thermometer 10 einen Außentemperatur-Sensor 15, insbesondere im Bereich des Griffs 11, auf.

Im Inneren des Thermometers 10 befindet sich eine Elektronikeinheit 16, vorzugsweise verbunden mit einer nicht dargestellten Batterie. Die Elektronikeinheit 16 ist mit einer Sendeeinheit 17 verbunden. Die Elektronikeinheit 16 und die Sendeeinheit 17 sind dazu ausgebildet, die gemessenen Temperaturen der Kerntemperatur-Sensoren 14 und des Außentemperatur-Sensors 15 drahtlos zu senden. Das Thermometer 10 kann einen internen Speicher umfassen, in dem zum Beispiel die gemessenen Temperaturwerte speicherbar sind. Dieser interne Speicher wird insbesondere genutzt, wenn die Funkverbindung zum Empfangsmodul 31 abbricht. Das kabellose übertragen der Daten kann fortgesetzt werden, sobald wieder eine Verbindung zum Empfangsmodul 31 aufgebaut werden kann.

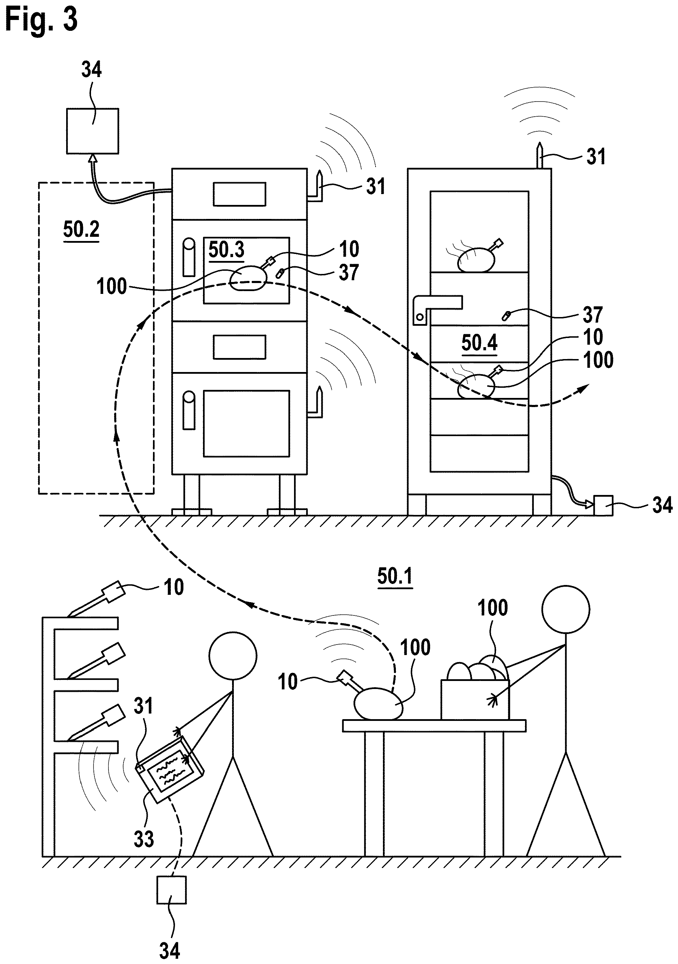

Ferner verdeutlichen insbesondere die Figuren 1 und 3, dass die Anordnung 1 eine Steuereinheit 30 umfasst. Diese Steuereinheit 30 kann mehrere Empfangsmodule 31 aufweisen. Die Empfangsmodule 31 empfangen die von der Sendeeinheit 17 der Thermometer 10 gesendeten Daten.

In der Elektronikeinheit 16 des jeweiligen Thermometers 10 ist ein spezifischer Identifikator, beispielsweise eine Nummer, hinterlegt. Die Sendeeinheit 17 sendet die gemessenen Temperaturen zusammen mit diesem Identifikator.

Die Steuereinheit 30 umfasst ferner ein Rechenmodul 32. Im gezeigten Ausführungsbeispiel befindet sich das Rechenmodul 32 in einem der Lebensmittelaufnahmegeräte 35. Allerdings zeigt die schematische Darstellung in den Figuren 1 und 3 auch eine Verbindung zu einem Server 34. Der Server 34 kann auch als Cloud bezeichnet werden. Die Verbindung zum Server 34 erfolgt über ein Netzwerk, beispielsweise das Internet. Dadurch ist es möglich, das Rechenmodul 32 vollständig oder teileweise in diesen Server 34 (Cloud) auszulagern.

Die Steuereinheit 30 umfasst mehrere Lebensmittelaufnahmegeräte 35, beispielsweise ein in Figuren 1 und 3 dargestelltes Gargerät oder ein in Figur 3 dargestelltes Warmhaltegerät. Weitere Beispiele für Lebensmittelaufnahmegeräte 35 sind im allgemeinen Teil der Beschreibung erläutert.

Figur 1 verdeutlicht rein schematisch, dass das Lebensmittelaufnahmegerät 35 einen Türschalter 36 aufweisen kann. Mit solch einem Türschalter 36 kann erfasst werden, ob die Tür des jeweiligen Lebensmittelaufnahmegerätes 35 betätigt wird.

Darüber hinaus kann die Steuereinheit 30 Aufnahmeraumtemperatur-Sensoren 37 aufweisen, die im jeweiligen Aufnahmeraum 50 die Temperatur messen.

Die Figuren 1 und 3 zeigen unterschiedliche Beispiele für Aufnahmeräume 50: So zeigt beispielsweise die untere Hälfte in Figur 3 einen Kühlraum 50.1 als Aufnahmeraum. In der oberen Hälfte der Figur 3 ist eine Küche 50.2 als Aufnahmeraum rein schematisch dargestellt. In dieser Küche 50.2 befindet sich ein erstes Lebensmittelaufnahmegerät 35 in Form eines Gargerätes. Dieses Gargerät bildet einen Garraum 50.3 als Aufnahmeraum. Rechts neben dem Gargerät befindet sich ein weiteres Lebensmittelaufnahmegerät 35 in Form eines Warmhaltegerätes. Dieses Warmhaltegerät bildet einen Warmhalteraum 50.4, der ebenfalls einen Aufnahmeraum darstellt.

Die Steuereinheit 30 kann, wie schematisch dargestellt, eine Mensch-Maschine-Schnittstelle 33 (MMS) umfassen. Beispielsweise kann ein ohnehin im Lebensmittelaufnahmegerät 35 vorhandenes Touchdisplay als solch eine MMS 33 verwendet werden, wie in Figur 1 dargestellt. Darüber hinaus zeigt Figur 3 rein beispielhaft, dass auch ein tragbares Endgerät, beispielsweise Tablet oder Smartphone, als MMS 33 zur Anwendung kommen kann. Figur 3 verdeutlicht dabei, dass die MMS 33 über ein drahtloses Netzwerk mit dem Server 34 und somit mit dem Rechenmodul 32 verbunden sein kann. Ferner ist schematisch dargestellt, dass auch ein Empfangsmodul 31 in diese MMS 33 integriert sein kann.

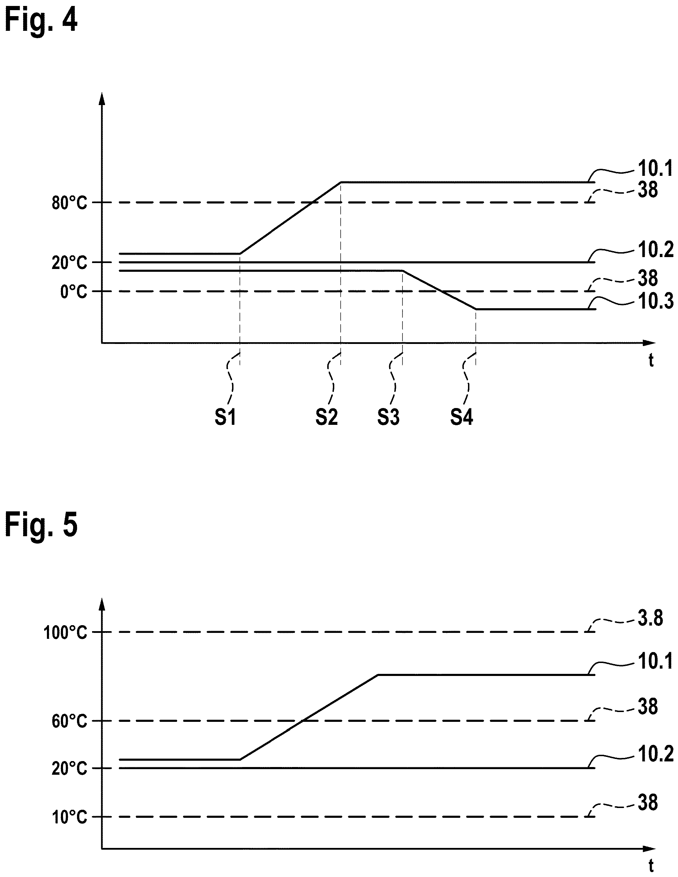

Wie im allgemeinen Teil der Beschreibung erläutert, können die Lebensmittel 100 mit eingestecktem Thermometer 10 zwischen diesen Aufnahmeräumen 50 überführt werden. Für die Beschreibung dieser Überführung und der Zuordnungen wird auf den allgemeinen Teil der Beschreibung verwiesen, der explizit auch Bestandteil dieses Ausführungsbeispiels ist. Im Folgenden wird anhand der Figuren 4 und 5 rein beispielhaft eine Thermometerzuordnung und eine Aufnahmeraumzuordnung beschrieben:

Figur 4 zeigt rein schematisch und stark vereinfacht den Verlauf der Außentemperatur von 3 Thermometern 10.1, 10.2 und 10.3 über der Zeit. Des Weiteren sind in Figur 4 zwei Außentemperatur-Referenzwerte 38 eingezeichnet.

Figur 4 verdeutlicht für das Thermometer 10.1, dass dieses eine Änderung der gemessenen Außentemperatur von ca. 20°C auf über 80°C erfährt. Dabei überschreitet die Außentemperatur des Thermometers 10.1 den oberen Außentemperatur-Referenzwert 38. Durch erkennen dieser Veränderung der Außentemperatur des Thermometers 10.1 kann die Steuereinheit 30 erkennen, dass eben jenes Thermometer als "eingestecktes Thermometer" zusammen mit einem Lebensmittel verwendet wird. Versuche haben gezeigt, dass ein Anstieg der Außentemperatur in einem Bereich von 0,5K-2K pro Sekunde stattfindet, sodass eine schnelle und somit benutzerfreundliche Zuordnung möglich ist.

Figur 4 zeigt rein schematisch die erkannten Schaltzustände S1 und S2 des Türschalters 36. Demgemäß kann anhand von S1 und S2 erkannt werden, dass die Tür des vorgeheizten Gargerätes zunächst geöffnet und dann wieder geschlossen wird. Diese Information kann für die Zuordnung oder für eine Verifikation einer Zuordnung genutzt werden.

Einen ähnlichen Vorgang zeigt Figur 4 rein beispielhaft für das Thermometer 10.3. Hier erfolgt die Verwendung des Thermometers 10.3 als eingestecktes Thermometer im Zusammenhang mit der Überführung des Lebensmittels 100 beispielsweise von der Küche 50.2 in einen Gefrierschrank.

Figur 4 zeigt rein schematisch die erkannten Schaltzustände S3 und S4 des Türschalters 36. Demgemäß kann anhand von S3 und S4 erkannt werden, dass die Tür des Gefrierschranks zunächst geöffnet und dann wieder geschlossen wird. Diese Information kann für die Zuordnung oder für eine Verifikation einer Zuordnung genutzt werden.

So verdeutlicht Figur 4, dass eine Thermometerzuordnung durch die einfache Verwendung von Außentemperatur-Referenzwerten 38 erfolgen kann.

Figur 5 verdeutlicht, dass gleichzeitig oder getrennt von der Thermometerzuordnung auch eine Aufnahmeraumzuordnung basierend auf der gemessenen Außentemperatur erfolgen kann. In Figur 5 sind drei Außentemperatur-Referenzwerte 38 eingezeichnet, beispielsweise bei 10°C, 60°C und 100°C. Im gezeigten Beispiel steigt die rein schematisch und stark vereinfacht dargestellte Außentemperatur des Thermometers 10.1 über den 60°C-Außentemperatur-Referenzwert, bleibt jedoch unterhalb des 100°C-Außentemperatur-Referenzwertes.

Der 60°C-Außentemperatur-Referenzwert kann beispielsweise dem Warmhalteraum 50.2 (siehe Figur 3) zugeordnet sein, wohingegen der 100°C-Außentemperatur-Referenzwert dem Garraum 50.3 (siehe Figur 3) zugeordnet sein kann. Bei Beobachtung der in Figur 5 dargestellten Änderung der gemessenen Außentemperatur des Thermometers 10.1 kann mittels der Steuereinheit darauf geschlossen werden, dass dieses Thermometer, nämlich 10.1 benutzt wird, und das dieses Thermometer in den Warmhalteraum 50.4 überführt wurde.

Es versteht sich, dass, wie im allgemeinen Teil der Beschreibung erläutert, die Referenzwerte an die Temperaturen der Aufnahmeräume 50 angepasst werden können. Darüber hinaus versteht sich, dass anstatt der in Figuren 4 und 5 gezeigten Verläufe der Außentemperatur auch Änderungsraten der gemessenen Außentemperaturen herangezogen werden können. Beispielsweise würde die Steigung der jeweiligen gemessenen Außentemperatur solch eine Änderungsrate angeben, die mit entsprechenden Änderungsrate-Referenzwerten zu Vergleichen ist, wie im allgemeinen Teil der Beschreibung erläutert.

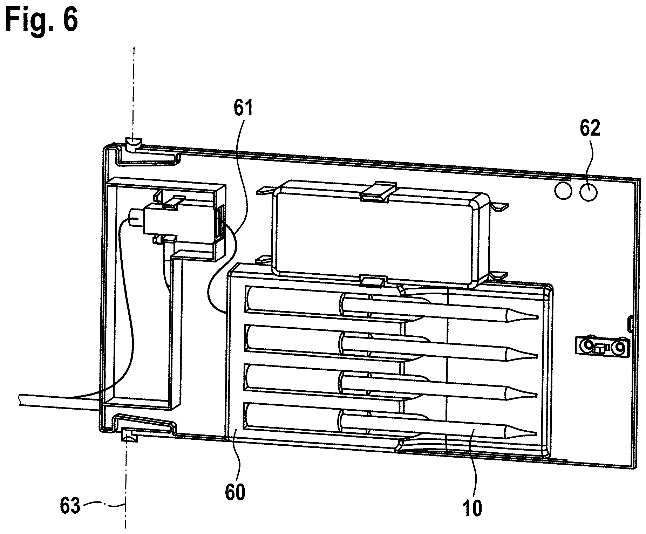

Figur 6 verdeutlicht, dass das Lebensmittelaufnahmegerät 35, wie es beispielsweise in Figur 1 gezeigt ist, eine integrierte Aufnahme 60 zum Einsetzten von zumindest einem der Thermometer 10 umfassen kann. Die Aufnahme 60 ist dabei zum Aufladen eines Energiespeichers des zumindest einen Thermometers 10 ausgebildet ist. Wie dargestellt ist die Aufnahme 60 zum Einsetzten und gleichzeitigen Laden von mehreren Thermometern 10 ausgebildet.

Das Lebensmittelaufnahmegerät 35 umfasst vorzugsweise eine nicht dargestellte Netzgerätanordnung mit zumindest einem Netzgerät. Die Netzgerätanordnung versorgt zumindest eine Vorrichtung des Lebensmittelaufnahmegerätes 35, die zum Erwärmen oder Kühlen des Lebensmittels 100 dient. Die Aufnahme 60 ist über eine schematisch dargestellte Kabelverbindung 61 an die Netzgerätanordnung angeschlossen, um mit der nötigen Energie zum Aufladen der Thermometer 10 versorgt zu werden.

Figur 6 zeigt, dass das Lebensmittelaufnahmegerät 35 eine Abdeckung 62, ausgebildet als schwenkbare Klappe mit Schwenkachse 63, umfasst, wobei die Aufnahme 60 an der Innenseite der Abdeckung 62 angeordnet ist. Die Abdeckung 62 kann einen Raum des Gehäuses des Lebensmittelaufnahmegeräts 35 verschließen.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

1 Anordnung
10 Thermometer
11 Griff
12 Stab
13 Spitze
14 Kerntemperatur-Sensoren
15 Außentemperatur-Sensor
16 Elektronikeinheit
17 Sendeeinheit
30 Steuereinheit
31 Empfangsmodul
32 Rechenmodul
33 Mensch-Maschine-Schnittstelle (MMS)
34 Server
35 Lebensmittelaufnahmegerät
36 Türschalter
37 Aufnahmeraumtemperatur-Sensor
38 Außentemperatur-Referenzwert
50 Aufnahmeräume
50.1 Kühlraum
50.2 Küche
50.3 Garraum
50.4 Warmhalteraum
60 Aufnahme
61 Kabelverbindung
62 Abdeckung
63 Schwenkachse
100 Lebensmittel

## Patentansprüche

1. Verfahren zur Handhabung von Lebensmitteln, umfassend folgende Schritte
• Bereitstellen mehrere Thermometer (10), jeweils mit einem, für das Thermometer (10) spezifischem Identifikator, wobei das jeweilige Thermometer (10) zumindest einen Kerntemperatur-Sensor (14) und einen Außentemperatur-Sensor (15) umfasst,
• Bereitstellen zumindest eines Lebensmittels (100), in dem eines der Thermometer (10) steckt, im Folgenden als "eingestecktes Thermometer" bezeichnet, wobei der Kerntemperatur-Sensor (14) des eingesteckten Thermometers (10) weiter im Inneren des Lebensmittels (100) angeordnet ist als der Außentemperatur-Sensor (15),
• fortdauerndes Messen einer Außentemperatur mit dem Außentemperatur-Sensor (15) der mehreren Thermometer (10),
• fortdauerndes kabelloses Übertragen der Außentemperatur zusammen mit dem Identifikator des jeweiligen Thermometers (10) an eine Steuereinheit (30),
• Überführen des Lebensmittels (100) samt dem eingesteckten Thermometer (10) von einem ersten Aufnahmeraum (50) mit einer erster Aufnahmeraumtemperatur in einen zweiten Aufnahmeraum (50) mit einer zweiten Aufnahmeraumtemperatur, wobei sich die beiden Aufnahmeraumtemperaturen voneinander unterscheiden,
• Thermometerzuordnung: Zuordnen mittels der Steuereinheit (30), welches der mehreren Thermometer (10) als "eingestecktes Thermometer" zusammen mit dem Lebensmittel (100) überführt wurde, basierend auf der gemessenen Außentemperatur der mehreren Thermometer (10).

2. Verfahren nach Anspruch 1, umfassend zumindest einen der folgenden Schritte zur Aufnahmeraumzuordnung:
• erste Aufnahmeraumzuordnung: Zuordnen mittels der Steuereinheit (30), in welchen Aufnahmeraum (50) das eingesteckte Thermometer (10) zusammen mit dem Lebensmittel (100) überführt wurde, basierend auf der gemessenen Außentemperatur des eingesteckten Thermometers (10),
• und/oder zweite Aufnahmeraumzuordnung: Zuordnen mittels der Steuereinheit (30), in welchen Aufnahmeraum (50) das eingesteckte Thermometer (10) zusammen mit dem Lebensmittel (100) überführt wurde, basierend
o auf dem Erkennen einer Betätigung einer Tür des zweiten Aufnahmeraums (50),
o und/oder auf dem Erfassen des Lebensmittels (100) und/oder des eingesteckten Thermometers (10) mittels einer Kamera im Übergangsbereich zwischen dem ersten Aufnahmeraum (50) und dem zweiten Aufnahmeraum (50)
o und/oder auf der Signalstärke der kabellosen Übertragung der Außentemperatur zusammen mit dem Identifikator des eingesteckten Thermometers (10) an die Steuereinheit (30).

3. Verfahren nach Anspruch 2, wobei mehr als zwei Aufnahmeräume (50) für die Zuordnung des eingesteckten Thermometers (10) zur Auswahl stehen.

4. Verfahren nach einem der vorhergehenden Ansprüchen, wobei die Thermometerzuordnung und/oder die erste Aufnahmeraumzuordnung
• auf der gemessenen Außentemperatur der Thermometer (10) im Vergleich zu zumindest einem Außentemperatur-Referenzwert (38) basiert,
• und/oder auf einer Änderungsrate der gemessenen Außentemperatur der Thermometer (10) im Vergleich zu zumindest einem Änderungsrate-Referenzwert basiert.

5. Verfahren nach Anspruch 4,
• wobei der zumindest eine Außentemperatur-Referenzwert (38) in der Steuereinheit (30) als fester Wert hinterlegt ist oder wobei der zumindest eine Außentemperatur-Referenzwert (38) in Abhängigkeit zumindest einer der Aufnahmeraumtemperaturen durch die Steuereinheit (30) angepasst wird;
• und/oder wobei der zumindest eine Änderungsrate-Referenzwert in der Steuereinheit (30) als fester Wert hinterlegt ist oder wobei der zumindest eine Änderungsrate-Referenzwert in Abhängigkeit zumindest einer der Aufnahmeraumtemperaturen durch die Steuereinheit (30) angepasst wird.

6. Verfahren nach einem der vorhergehenden Ansprüche, wobei die Thermometerzuordnung und/oder die Aufnahmeraumzuordnung gestartet wird/werden, wenn zumindest eine der folgenden Startvoraussetzungen vorliegt:
• Erkennen einer Betätigung einer Tür einer der Aufnahmeräume (50),
• Erfassen des Lebensmittels (100) und/oder des eingesteckten Thermometers (10) mittels einer Kamera im Übergangsbereich zwischen dem ersten Aufnahmeraum (50) und dem zweiten Aufnahmeraum (50),
• Erkennen eines Temperaturunterschiedes zwischen der mit dem Kerntemperatur-Sensor (14) gemessenen Kerntemperatur und der Außentemperatur an einem der Thermometer (10),
• Benutzereingabe, insbesondere an einem Lebensmittelaufnahmegerät (35), das den zweiten Aufnahmeraum (50) bildet.

7. Verfahren nach einem der vorhergehenden Ansprüche,
• wobei die Thermometerzuordnung einem Benutzer angezeigt wird, und vorzugsweise durch den Benutzer Bestätigbar und/oder Änderbar ist,
• und/oder wobei die Aufnahmeraumzuordnung einem Benutzer angezeigt wird, und vorzugsweise durch den Benutzer Bestätigbar und/oder Änderbar ist.

8. Verfahren nach einem der vorhergehenden Ansprüche, wobei eine Kerntemperatur mit dem Kerntemperatur-Sensor (14) des eingesteckten Thermometers (10) fortdauernd gemessen wird und die Kerntemperatur zusammen mit dem Identifikator fortdauernd kabellos an die Steuereinheit (30) übertragen wird.

9. Verfahren nach Anspruch 8, wobei
• die Kerntemperatur und der zugehörige Aufnahmeraum (50) angezeigt werden,
• und/oder die Kerntemperatur an einem Display eines Lebensmittelaufnahmegerätes (35) angezeigt wird, das den zweiten Aufnahmeraum (50) bildet,
• und/oder in Abhängigkeit der Kerntemperatur die Temperatur des ersten Aufnahmeraums (50) und/oder des zweiten Aufnahmeraums (50) gesteuert wird,
• und/oder in Abhängigkeit der Kerntemperatur eine Verweilzeit des Lebensmittels (100) im zweiten Aufnahmeraum (50) bestimmt, und vorzugsweise angezeigt, wird,
• und/oder in Abhängigkeit der Kerntemperatur eine Warnung ausgegeben wird, wenn das Lebensmittel (100) bei zu geringer Kerntemperatur überführt wird.

10. Verfahren nach einem der vorhergehende Ansprüche, wobei zur Qualitätsüberwachung des Lebensmittels (100) mittels der Steuereinheit (30) die zeitliche Abfolge der Thermometerzuordnung und/oder Aufnahmeraumzuordnung, insbesondere auch die gemessenen Temperaturen, protokolliert wird/werden.

11. Anordnung (1) zur Handhabung von Lebensmitteln, vorzugsweise ausgebildet zur Durchführung des Verfahrens nach einem der vorhergehenden Ansprüche, umfassend:
• mehrere Thermometer (10), jeweils mit einem, für das Thermometer (10) spezifischem Identifikator, wobei das jeweilige Thermometer (10) zumindest einen Kerntemperatur-Sensor (14) und einen Außentemperatur-Sensor (15) umfasst,
o wobei die Thermometer (10) zum Einstecken in ein Lebensmittel (100) ausgebildet sind, sodass der Kerntemperatur-Sensor (14) des eingesteckten Thermometers (10) weiter im Inneren des Lebensmittels (100) anordenbar ist als der Außentemperatur-Sensor (15),
o wobei die Thermometer (10) zum fortdauernden Messen einer Außentemperatur mit dem Außentemperatur-Sensor (15) ausgebildet sind,
o wobei die Thermometer (10) zum fortdauernden kabellosen Übertragen der Außentemperatur zusammen mit dem Identifikator des jeweiligen Thermometers (10) an eine Steuereinheit (30) ausgebildet sind,
• und die Steuereinheit (30), ausgebildet zum Zuordnen, welches Thermometer (10) als "eingestecktes Thermometer" zusammen mit einem Lebensmittel (100) überführt wurde, basierend auf der gemessenen Außentemperatur der Thermometer (10), wenn ein Überführen des Lebensmittels (100) samt dem eingesteckten Thermometer (10) von einem ersten Aufnahmeraum mit einer erster Aufnahmeraumtemperatur in einen zweiten Aufnahmeraum mit einer zweiten Aufnahmeraumtemperatur stattfindet, wobei sich die beiden Aufnahmeraumtemperaturen voneinander unterscheiden.

12. Anordnung (1) nach Anspruch 11, wobei die Steuereinheit (30) umfasst:
• zumindest ein Empfangsmodul (31), wobei die Thermometer (10) und das Empfangsmodul (31) zur kabellosen Datenübertragung ausgebildet sind,
• und/oder zumindest ein Rechenmodul (32), das zur Durchführung der Zuordnung(en) ausgebildet ist,
• und/oder zumindest eine Mensch-Maschine-Schnittstelle (33), im Folgenden als MMS bezeichnet,
• und/oder zumindest ein Lebensmittelaufnahmegerät (35), das einen der Aufnahmeräum bildet, vorzugsweise ausgebildet als Gargerät, Warmhaltegerät, Schnellkühler, Schockfroster, Kühlschrank, Gefrierschrank, Kühlraum (50.1), Lagerraum oder Gefrierraum.

13. Anordnung nach Anspruch 12, wobei das Empfangsmodul (31) in das Lebensmittelaufnahmegerät (35) integriert ist, und/oder wobei das Empfangsmodul (31) an ein Netzwerk angebunden ist; vorzugsweise wobei mehrere, insbesondere alle, Empfangsmodule (31) direkt und/oder über das Netzwerk miteinander verbunden sind, sodass die Thermometer (10) an ein beliebiges Empfangsmodul (31) übertragen können.

14. Anordnung (1) nach einem der Ansprüche 12 oder 13, wobei das Rechenmodul (32) in das Lebensmittelaufnahmegerät (35) integriert ist, und/oder wobei das Rechenmodul (32) an ein Netzwerk angebunden ist.

15. Anordnung (1) nach einem der Ansprüche 12 bis 14, umfassend zumindest zwei Empfangsmodule (31), eines angeordnet für den Empfang im Inneren des Lebensmittelaufnahmegerätes (35) und eines angeordnet für den Empfang außerhalb des Lebensmittelaufnahmegerätes (35).

## Claims

1. Method for handling food, comprising the following steps:
• providing a plurality of thermometers (10), each with an identifier specific to the thermometer (10), wherein the respective thermometer (10) comprises at least one core temperature sensor (14) and one outside temperature sensor (15),
• providing at least one food (100) in which one of the thermometers (10) is inserted, hereinafter referred to as "inserted thermometer", wherein the core temperature sensor (14) of the inserted thermometer (10) is arranged further inside the food (100) than the outside temperature sensor (15),
• continuously measuring an outside temperature with the outside temperature sensor (15) of the plurality of thermometers (10),
• continuously wirelessly transmitting the outside temperature together with the identifier of the respective thermometer (10) to a control unit (30),
• transferring the food (100) together with the inserted thermometer (10) from a first receiving space (50) with a first receiving space temperature into a second receiving space (50) with a second receiving space temperature, wherein the two receiving space temperatures differ from one another,
• allocating, by means of the control unit (30), which of the plurality of thermometers (10) was transferred as "inserted thermometer" together with the food (100), based on the measured outside temperature of the plurality of thermometers (10).

2. Method according to claim 1, comprising at least one of the following steps for receiving space allocation:
• first receiving space allocation: allocating, by means of the control unit (30), into which receiving space (50) the inserted thermometer (10) was transferred together with the food (100), based on the measured outside temperature of the inserted thermometer (10),
• and/or second receiving space allocation: allocating, by means of the control unit (30), into which receiving space (50) the inserted thermometer (10) was transferred together with the food (100), based on
o the detection of an actuation of a door of the second receiving space (50),
o and/or on the detection of the food (100) and/or of the inserted thermometer (10) by means of a camera in the transition region between the first receiving space (50) and the second receiving space (50),
o and/or on the signal strength of the wireless transmission of the outside temperature together with the identifier of the inserted thermometer (10) to the control unit (30).

3. Method according to claim 2, wherein more than two receiving spaces (50) are available for selection for the allocation of the inserted thermometer (10).

4. Method according to one of the preceding claims, wherein the thermometer allocation and/or the first receiving space allocation
• is based on the measured outside temperature of the thermometers (10) in comparison with at least one outside temperature reference value (38),
• and/or is based on a rate of change of the measured outside temperature of the thermometers (10) in comparison with at least one rate of change reference value.

5. Method according to claim 4,
• wherein the at least one outside temperature reference value (38) is stored in the control unit (30) as a fixed value or wherein the at least one outside temperature reference value (38) is adapted by the control unit (30) as a function of at least one of the receiving space temperatures;
• and/or wherein the at least one rate of change reference value is stored in the control unit (30) as a fixed value or wherein the at least one rate of change reference value is adapted by the control unit (30) as a function of at least one of the receiving space temperatures.

6. Method according to one of the preceding claims, wherein the thermometer allocation and/or the receiving space allocation is/are started when at least one of the following starting prerequisites is present:
• detection of an actuation of a door of one of the receiving spaces (50),
• detection of the food (100) and/or of the inserted thermometer (10) by means of a camera in the transition region between the first receiving space (50) and the second receiving space (50),
• detection of a temperature difference between the core temperature measured with the core temperature sensor (14) and the outside temperature at one of the thermometers (10),
• user input, in particular at a food receiving device (35) which forms the second receiving space (50).

7. Method according to one of the preceding claims,
• wherein the thermometer allocation is displayed to a user, and can preferably be confirmed and/or changed by the user,
• and/or wherein the receiving space allocation is displayed to a user, and can preferably be confirmed and/or changed by the user.

8. Method according to one of the preceding claims, wherein a core temperature is continuously measured with the core temperature sensor (14) of the inserted thermometer (10) and the core temperature together with the identifier is continuously wirelessly transmitted to the control unit (30).

9. Method according to claim 8, wherein
• the core temperature and the associated receiving space (50) are displayed,
• and/or the core temperature is displayed on a display of a food receiving device (35) which forms the second receiving space (50),
• and/or the temperature of the first receiving space (50) and/or of the second receiving space (50) is controlled as a function of the core temperature,
• and/or a residence time of the food (100) in the second receiving space (50) is determined, and preferably displayed, as a function of the core temperature,
• and/or a warning is output as a function of the core temperature if the food (100) is transferred at too low a core temperature.

10. Method according to one of the preceding claims, wherein, for quality monitoring of the food (100), the time sequence of the thermometer allocation and/or receiving space allocation, in particular also the measured temperatures, is/are logged by means of the control unit (30).

11. Arrangement (1) for handling food, preferably designed to carry out the method according to one of the preceding claims, comprising:
• a plurality of thermometers (10), each with an identifier specific to the thermometer (10), wherein the respective thermometer (10) comprises at least one core temperature sensor (14) and one outside temperature sensor (15),
o wherein the thermometers (10) are designed for insertion into a food (100), so that the core temperature sensor (14) of the inserted thermometer (10) can be arranged further inside the food (100) than the outside temperature sensor (15),
o wherein the thermometers (10) are designed for continuously measuring an outside temperature with the outside temperature sensor (15),
o wherein the thermometers (10) are designed for continuously wirelessly transmitting the outside temperature together with the identifier of the respective thermometer (10) to a control unit (30),
• and the control unit (30), designed for allocating which thermometer (10) was transferred as "inserted thermometer" together with a food (100), based on the measured outside temperature of the thermometers (10), when transferring the food (100) together with the inserted thermometer (10) from a first receiving space with a first receiving space temperature into a second receiving space with a second receiving space temperature takes place, wherein the two receiving space temperatures differ from one another.

12. Arrangement (1) according to claim 11, wherein the control unit (30) comprises:
• at least one receiving module (31), wherein the thermometers (10) and the receiving module (31) are designed for wireless data transmission,
• and/or at least one computing module (32), which is designed to carry out the allocation(s),
• and/or at least one man-machine interface (33), hereinafter referred to as MMS,
• and/or at least one food receiving device (35), which forms one of the receiving spaces, preferably designed as cooking device, warming device, quick cooler, shock freezer, refrigerator, freezer, refrigerating space (50.1), storage space or freezing space.

13. Arrangement according to claim 12, wherein the receiving module (31) is integrated into the food receiving device (35), and/or wherein the receiving module (31) is connected to a network; preferably wherein a plurality of, in particular all, receiving modules (31) are connected to one another directly and/or via the network, so that the thermometers (10) can transmit to any receiving module (31).

14. Arrangement (1) according to one of claims 12 or 13, wherein the computing module (32) is integrated into the food receiving device (35), and/or wherein the computing module (32) is connected to a network.

15. Arrangement (1) according to one of claims 12 to 14, comprising at least two receiving modules (31), one arranged for receiving inside the food receiving device (35) and one arranged for receiving outside the food receiving device (35).

## Revendications

1. Procédé de manipulation d'aliments, comprenant les étapes suivantes :
• mise à disposition de plusieurs thermomètres (10), chacun avec un identificateur spécifique pour le thermomètre (10), le thermomètre (10) respectif comprenant au moins un capteur de température centrale (14) et un capteur de température extérieure (15),
• mise à disposition d'au moins un aliment (100) dans lequel l'un des thermomètres (10) est enfiché, ci-après dénommé « thermomètre enfiché », le capteur de température centrale (14) du thermomètre (10) enfiché étant disposé plus loin à l'intérieur de l'aliment (100) que le capteur de température extérieure (15),
• mesure continue d'une température extérieure avec le capteur de température extérieure (15) des plusieurs thermomètres (10),
• transmission continue sans fil de la température extérieure conjointement avec l'identificateur du thermomètre (10) respectif à une unité de commande (30),
• transfert de l'aliment (100) avec le thermomètre (10) enfiché d'un premier espace de réception (50) avec une première température d'espace de réception dans un deuxième espace de réception (50) avec une deuxième température d'espace de réception, les deux températures d'espace de réception étant différentes l'une de l'autre,
• affectation de thermomètres : affectation au moyen de l'unité de commande (30) duquel des plusieurs thermomètres (10) a été transféré en tant que « thermomètre enfiché » conjointement avec l'aliment (100), sur la base de la température extérieure mesurée des plusieurs thermomètres (10).

2. Procédé selon la revendication 1, comprenant au moins l'une des étapes suivantes pour l'affectation d'espace de réception :
• première affectation d'espace de réception : affectation au moyen de l'unité de commande (30) dans quel espace de réception (50) le thermomètre (10) enfiché a été transféré conjointement avec l'aliment (100), sur la base de la température extérieure mesurée du thermomètre (10) enfiché,
• et/ou deuxième affectation d'espace de réception : affectation au moyen de l'unité de commande (30) dans quel espace de réception (50) le thermomètre (10) enfiché a été transféré conjointement avec l'aliment (100), sur la base
o de la reconnaissance d'un actionnement d'une porte du deuxième espace de réception (50),
o et/ou de la détection de l'aliment (100) et/ou du thermomètre (10) enfiché au moyen d'une caméra dans la zone de transition entre le premier espace de réception (50) et le deuxième espace de réception (50),
o et/ou de l'intensité de signal de la transmission sans fil de la température extérieure conjointement avec l'identificateur du thermomètre (10) enfiché à l'unité de commande (30).

3. Procédé selon la revendication 2, plus de deux espaces de réception (50) étant disponibles pour l'affectation du thermomètre (10) enfiché.

4. Procédé selon l'une quelconque des revendications précédentes, l'affectation de thermomètre et/ou la première affectation d'espace de réception
• étant basée sur la température extérieure mesurée des thermomètres (10) par rapport à au moins une valeur de référence de température extérieure (38),
• et/ou étant basée sur un taux de variation de la température extérieure mesurée des thermomètres (10) par rapport à au moins une valeur de référence de taux de variation.

5. Procédé selon la revendication 4,
• l'au moins une valeur de référence de température extérieure (38) étant stockée dans l'unité de commande (30) en tant que valeur fixe ou l'au moins une valeur de référence de température extérieure (38) étant adaptée par l'unité de commande (30) en fonction d'au moins une des températures d'espace de réception ;
• et/ou l'au moins une valeur de référence de taux de variation étant stockée dans l'unité de commande (30) en tant que valeur fixe ou l'au moins une valeur de référence de taux de variation étant adaptée par l'unité de commande (30) en fonction d'au moins une des températures d'espace de réception.

6. Procédé selon l'une quelconque des revendications précédentes, l'affectation de thermomètre et/ou l'affectation d'espace de réception étant démarrée(s) lorsqu'au moins l'une des conditions de démarrage suivantes est présente :
• reconnaissance d'un actionnement d'une porte d'un des espaces de réception (50),
• détection de l'aliment (100) et/ou du thermomètre (10) enfiché au moyen d'une caméra dans la zone de transition entre le premier espace de réception (50) et le deuxième espace de réception (50),
• reconnaissance d'une différence de température entre la température centrale mesurée avec le capteur de température centrale (14) et la température extérieure au niveau de l'un des thermomètres (10),
• entrée utilisateur, en particulier au niveau d'un appareil de réception d'aliments (35) qui forme le deuxième espace de réception (50).

7. Procédé selon l'une quelconque des revendications précédentes,
• l'affectation de thermomètres étant affichée à un utilisateur, et de préférence pouvant être confirmée et/ou modifiée par l'utilisateur,
• et/ou l'affectation d'espace de réception étant affichée à un utilisateur, et de préférence pouvant être confirmée et/ou modifiée par l'utilisateur.

8. Procédé selon l'une quelconque des revendications précédentes, une température centrale étant mesurée en continu avec le capteur de température centrale (14) du thermomètre (10) enfiché et la température centrale conjointement avec l'identificateur étant transmise en continu sans fil à l'unité de commande (30).

9. Procédé selon la revendication 8,
• la température centrale et l'espace de réception (50) associé étant affichés,
• et/ou la température centrale étant affichée au niveau d'un affichage d'un appareil de réception d'aliments (35) qui forme le deuxième espace de réception (50),
• et/ou la température du premier espace de réception (50) et/ou du deuxième espace de réception (50) étant commandée en fonction de la température centrale,
• et/ou un temps de séjour de l'aliment (100) dans le deuxième espace de réception (50) étant déterminé, et de préférence affiché, en fonction de la température centrale,
• et/ou un avertissement étant émis en fonction de la température centrale lorsque l'aliment (100) est transféré à une température centrale trop basse.

10. Procédé selon l'une quelconque des revendications précédentes, la succession temporelle de l'affectation de thermomètre et/ou de l'affectation d'espace de réception, en particulier également les températures mesurées, étant enregistrée(s) pour la surveillance de la qualité de l'aliment (100) au moyen de l'unité de commande (30).

11. Agencement (1) de manipulation d'aliments, de préférence réalisé pour la mise en oeuvre du procédé selon l'une quelconque des revendications précédentes, comprenant :
• plusieurs thermomètres (10), chacun avec un identificateur spécifique pour le thermomètre (10), le thermomètre (10) respectif comprenant au moins un capteur de température centrale (14) et un capteur de température extérieure (15),
o les thermomètres (10) étant réalisés pour être enfichés dans un aliment (100) de sorte que le capteur de température centrale (14) du thermomètre (10) enfiché puisse être disposé plus loin à l'intérieur de l'aliment (100) que le capteur de température extérieure (15),
o les thermomètres (10) étant réalisés pour la mesure continue d'une température extérieure avec le capteur de température extérieure (15),
o les thermomètres (10) étant réalisés pour la transmission continue sans fil de la température extérieure conjointement avec l'identificateur du thermomètre (10) respectif à une unité de commande (30),
• et l'unité de commande (30), réalisée pour affecter quel thermomètre (10) a été transféré en tant que « thermomètre enfiché » conjointement avec un aliment (100), sur la base de la température extérieure mesurée des thermomètres (10), lorsqu'un transfert de l'aliment (100) avec le thermomètre (10) enfiché d'un premier espace de réception avec une première température d'espace de réception dans un deuxième espace de réception avec une deuxième température d'espace de réception a lieu, les deux températures d'espace de réception étant différentes l'une de l'autre.

12. Agencement (1) selon la revendication 11, l'unité de commande (30) comprenant :
• au moins un module de réception (31), les thermomètres (10) et le module de réception (31) étant réalisés pour la transmission de données sans fil,
• et/ou au moins un module de calcul (32), qui est réalisé pour la mise en oeuvre de l'affectation (des affectations),
• et/ou au moins une interface homme-machine (33), ci-après dénommée MMS,
• et/ou au moins un appareil de réception d'aliments (35), qui forme un des espaces de réception, de préférence réalisé sous forme d'appareil de cuisson, appareil de maintien à chaud, refroidisseur rapide, congélateur, réfrigérateur, congélateur, espace de réfrigération (50.1), espace de stockage ou espace de congélation.

13. Agencement selon la revendication 12, le module de réception (31) étant intégré dans l'appareil de réception d'aliments (35), et/ou le module de réception (31) étant relié à un réseau ; de préférence plusieurs, en particulier tous les modules de réception (31) étant connectés les uns aux autres directement et/ou par le biais du réseau, de sorte que les thermomètres (10) puissent être transmis à un module de réception (31) quelconque.

14. Agencement (1) selon l'une quelconque des revendications 12 ou 13, le module de calcul (32) étant intégré dans l'appareil de réception d'aliments (35), et/ou le module de calcul (32) étant relié à un réseau.

15. Agencement (1) selon l'une quelconque des revendications 12 à 14, comprenant au moins deux modules de réception (31), l'un étant disposé pour la réception à l'intérieur de l'appareil de réception d'aliments (35) et l'autre étant disposé pour la réception à l'extérieur de l'appareil de réception d'aliments (35).
